# EUROPEAN PATENT APPLICATION

(11) **EP 3 154 297 A1**
(43) Date of publication of application: **12.04.2017**
(21) Application number: 14888609.6
(22) Date of filing: 10.12.2014
(51) Int. Cl.: H04W 56/00

(54) **METHOD AND SYSTEM FOR REALIZING D2D COMMUNICATION SYNCHRONIZATION, AND BASE STATION**

(30) Priority: 07.07.2014 CN 201410319950
(71) Applicant: ZTE Corporation, Shenzhen, Guangdong 518057 (CN)
(72) Inventor: GUO, Shengxiang, Shenzhen Guangdong 518057 (CN)
(74) Representative: Savi, Massimiliano
(86) International application number: PCT/CN2014/093501
(87) International publication number: WO 2015/154503

(57) **Abstract**

Disclosed are a method and a system for realizing Device-to-Device D2D communication synchronization, and a base station. The method includes: a second cell serving base station at which second UE is located receives a notification, sent by a first cell serving base station at which first UE is located, about making a preparation for D2D communication; and the second cell serving base station acquires synchronization information of the first cell serving base station; and the second cell serving base station sends the acquired synchronization information of the first cell serving base station to the second UE, such that the second UE performs a synchronization search and establishes communication synchronization with the first UE.

## Description

### Technical Field

The present application relates to a Device-to-Device D2D communication technology, in particular to a method and system for realizing D2D communication synchronization and a base station.

### Background

In order to fully utilize the existing spectrum resources, the Third Generation Partnership Projects 3GPP organization puts forward a D2D communication technology. The D2D technology allows D2D users, i.e., User Equipment UEs which perform D2D communication, to directly perform communication by multiplexing cell resources under the control of a system. The D2D technology can increase the spectrum efficiency of a cellular communication system and decrease the transmitting power of a terminal, and the problem of shortage in spectrum resources for radio communication systems is solved to a certain extent.

A D2D communication process needs to satisfy synchronization of communication between UE. For D2D users which are in the same cell, since all D2D users are kept to be synchronous with a cell serving base station, the D2D users have already had the same synchronization reference therebetween, and an additional synchronization process may not be needed. However, for D2D users which are not in the same cell, since serving cells are possibly asynchronous, the D2D users are also possibly asynchronous therebetween. At this moment, the D2D users need an additional synchronization process therebetween.

At present, when the D2D users which are not in the same cell need to realize D2D communication, a method for realizing inter-cell UE communication synchronization approximately includes the following operations. A D2D user 1, e.g., UE1, transmits a synchronization signal which may be a synchronization signal of a serving base station at which UE1 is located. A D2D user of another cell, i.e., UE2, is synchronized with UE1 by searching the synchronization signal. By adopting that communication synchronization method, UE1 needs to transmit the synchronization signal such that a certain spectrum resource is occupied. In addition, since UE2 does not know the time for starting to search the synchronization signal for D2D communication, a search period needs to be lengthened such that UE2 can be guaranteed to acquire the synchronization signal to realize communication synchronization. Undoubtedly, the synchronization process will be prolonged.

To sum up, in the above-mentioned method of realizing D2D communication synchronization, on one hand, the user who makes a D2D communication request needs to transmit the synchronization signal, and consequently the waste of spectrum resources is caused. The UE which acquires the synchronization signal needs a relatively long search period during synchronization, and the synchronization process is time-consuming and the D2D communication efficiency is reduced.

### Summary of the Invention

In order to solve the above-mentioned problem, embodiments of the present invention provide a method and a system for realizing D2D communication synchronization and a base station, which can save spectrum resources, simultaneously reduce time length for D2D communication synchronization and improve D2D communication efficiency.

A method for realizing Device-to-Device D2D communication synchronization includes:
a second cell serving base station at which a second User Equipment UE is located receiving a notification, sent by a first cell serving base station at which a first UE is located, about making a preparation for D2D communication; and the second cell serving base station acquiring synchronization information of the first cell serving base station; and
the second cell serving base station sending the acquired synchronization information of the first cell serving base station to the second UE, such that the second UE performs a synchronization search and establishes communication synchronization with the first UE.
Alternatively, the notification is sent by the first cell serving base station after the first cell serving base station determines that the first UE and the second UE, which perform D2D communication, are not in a same cell; and
determining that the first UE and the second UE are not in the same cell includes:
   the first UE sending a D2D communication request to the first cell serving base station, herein the D2D communication request carries an identification of the second UE; and the first cell serving base station determining a cell in which the second UE is located according to the identification of the second UE carried in the D2D communication request to determine that the first UE and the second UE are not in the same cell.

Alternatively, the second cell serving base station receives the notification sent by the first cell serving base station through an X2 interface.

Alternatively, the notification further carries the synchronization information of the first cell serving base station; and
the synchronization information at least includes: information about a spectrum resource occupied by a primary synchronization signal/secondary synchronization signal.

Alternatively, the second cell serving base station acquiring synchronization information of the first cell serving base station includes:
the second cell serving base station acquiring the synchronization information of the first cell serving base station from information reported by other UE in a cell in which the second UE is located.

Alternatively, when the second cell serving base station sends the acquired synchronization information of the first cell serving base station to the second UE to perform the synchronization search, the method further includes:
the second cell serving base station determining a spectrum resource occupied by the first cell serving base station for transmitting data according to the synchronization information of the first cell serving base station, and performing avoidance scheduling on transmitted data which cause a conflict with the spectrum resource occupied by the first cell serving base station in combination with a spectrum resource occupied by the second cell serving base station for transmitting data.

A system for realizing Device-to-Device D2D communication synchronization includes: a first User Equipment UE, a second UE, a first cell serving base station at which the first UE is located and a second cell serving base station at which the second UE is located, herein,
the first cell serving base station is arranged to determine that the first UE and the second UE which perform D2D communication are not a same cell and send a notification about making a preparation for D2D communication to the second cell serving base station;
the second cell serving base station is arranged to acquire synchronization information of the first cell serving base station and send the acquired synchronization information of the first cell serving base station to the second UE to perform a synchronization search;
the second UE is arranged to perform the synchronization search according to the received synchronization information and establish communication synchronization with the first UE; and
the first UE is arranged to establish the communication synchronization with the second UE.

Alternatively, the first UE is further arranged to send a D2D communication request carrying an identification of the second UE to the first cell serving base station; and
the first cell serving base station is arranged to determine a cell in which the second UE is located according to the identification of the second UE carried in the D2D communication request to determine that the first UE and the second UE are not in the same cell, and send to the second cell serving base station.

Alternatively, the first cell serving base station is arranged to send the notification to the second cell serving base station through an X2 interface.

Alternatively, the notification further carries the synchronization information of the first cell serving base station; and
the synchronization information at least includes: information about a spectrum resource occupied by a primary synchronization signal/secondary synchronization signal.

Alternatively, the second cell serving base station is arranged to acquire the synchronization information of the first cell serving base station from information reported by other UE in a cell in which the second UE is located.

Alternatively, the second cell serving base station is further arranged to, when the acquired synchronization information of the first cell serving base station is sent to the second UE to perform the synchronization search, determine a spectrum resource occupied by the first cell serving base station for transmitting data according to the synchronization information of the first cell serving base station, and perform avoidance scheduling on transmitted data, which cause a conflict with the spectrum resource occupied by the first cell serving base station, in combination with a spectrum resource occupied by the second cell serving base station for transmitting data.

The embodiment of the present invention further provides a base station, including:
a receiving module arranged to receive a notification, sent by a first cell serving base station at which a first UE is located, about making a preparation for D2D communication between the first UE and a second UE served by the base station;
an acquisition module arranged to acquire synchronization information of the first cell serving base station at which the first UE is located; and
a sending module arranged to send the acquired synchronization information of the first cell serving base station to the second UE served by the base station, such that the second UE performs a synchronization search and establishes communication synchronization with the first UE.

Alternatively, the receiving module is arranged to receive the notification sent by the first cell serving base station through an X2 interface.

Alternatively, the notification further carries the synchronization information of the first cell serving base station; and
the synchronization information at least includes: information about a spectrum resource occupied by a primary synchronization signal/secondary synchronization signal.

Alternatively, the acquisition module is arranged to acquire the synchronization information of the first cell serving base station from information reported by other UE in a cell in which the second UE is located.

Alternatively, the base station further includes:
a scheduling module arranged to determine a spectrum resource occupied by the first cell serving base station for transmitting data according to the synchronization information of the first cell serving base station, and perform avoidance scheduling on transmitted data, which cause a conflict with the spectrum resource occupied by the first cell serving base station, in combination with a spectrum resource occupied by the base station for transmitting data.

The embodiment of the present invention further provides a computer program including program instructions, herein, when the program instructions are executed by a base station, a computer can implement the method described above.

The embodiment of the present invention further provides computer-readable storage medium carrying the computer program.

According to the embodiments of the present invention, since the second cell serving base station sends the synchronization notification about the synchronization search to the second UE, no spectrum resource is occupied. The second UE quickly realizes synchronization with the first UE on the premise that the second cell serving base station schedules the cell thereof to avoid transmitting data on the spectrum resource for the synchronization information, and the synchronization time is saved, and the communication efficiency is improved.

### Brief Description of Drawings

The drawings are used for providing further understanding to the technical solution of the present application, and constitute a part of the description. The drawings are used for explaining the technical solution of the present application together with the embodiments of the present application, and do not form any limitation to the technical solution of the present application.
FIG. 1 illustrates a flowchart of a method for realizing D2D communication synchronization provided by an embodiment of the present invention.
FIG. 2 illustrates a structural diagram of a system for realizing D2D communication synchronization provided by an embodiment of the present invention.
FIG. 3 illustrates a structural diagram of a base station provided by an embodiment of the present invention.

### Preferred Embodiments of the Invention

Embodiments of the present application will be described below in detail with reference to the drawings. It needs to be stated that the embodiments in the present application and the features in the embodiments may be mutually and freely combined under the situation of no conflict.

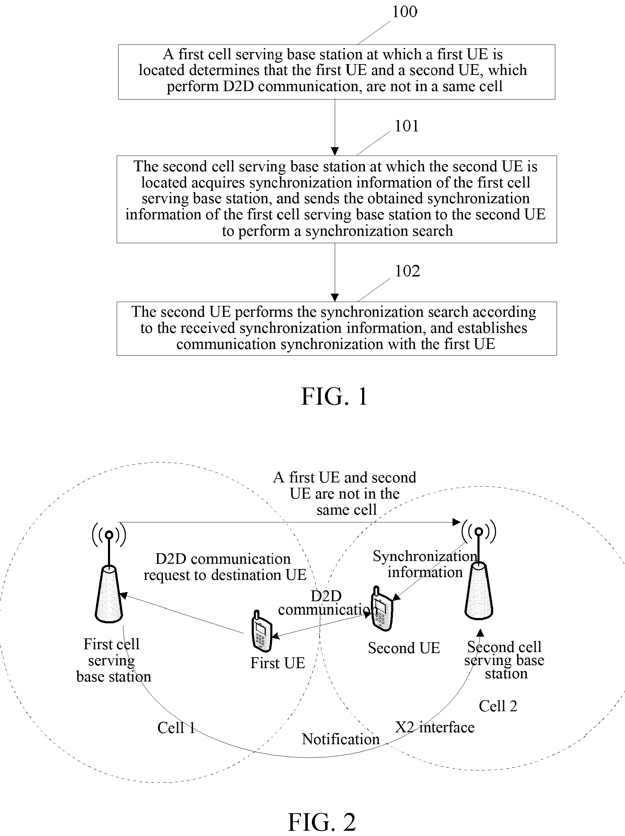

FIG. 1 illustrates a flowchart of a method for realizing D2D communication synchronization provided by an embodiment of the present invention. As illustrated in FIG. 1, the method includes the following steps.

In step 100, a first cell serving base station at which first UE is located determines that the first UE and second UE, which perform D2D communication, are not in a same cell. Then the first cell serving base station notifies a second cell serving base station at which the second UE is located to make a preparation for D2D communication.

In that step, the operation of determining that the first UE and the second UE are not in the same cell includes the following operations.

The first UE sends a D2D communication request to the first cell serving base station such as eNB1, herein the D2D communication request carries an identification of the second UE.

The first cell serving base station determines a cell in which the second UE is located according to the identification of the second UE carried in the D2D communication request to determine that the first UE and the second UE are not in the same cell.

It needs to be stated that, when the first UE and the second UE belong to the same cell, since the communication in the same cell is synchronous, direct communication may be performed. A manner for determining the cell in which the second UE is located may include an operation that saved information about a cell location is searched for from a home location register according to the identification of the second UE.

The first cell serving base station may notify the second cell serving base station to make a preparation for D2D communication through an X2 interface.

In step 101, the second cell serving base station at which the second UE is located acquires synchronization information of the first cell serving base station, and sends the acquired synchronization information of the first cell serving base station to the second UE to perform a synchronization search.

In step 100, the notification sent by the first cell serving base station may carry synchronization information of the first cell serving base station. In the step, the second cell serving base station may acquire the synchronization information of the first cell serving base station from the notification. Here, the X2 interface is an interface which realizes interconnection between cell serving base stations, and includes communication interfaces of an X2 user plane and an X2 control plane. The interface of the X2 user plane has a function of transmitting user data between eNBs. Through the transmission of the synchronization information between X2 interfaces, the spectrum resources occupied in the synchronization process are reduced. The eNB is just one type of cell serving base stations in an LTE network. According to different networks, the cell serving base stations may be serving base stations of corresponding networks.

When the notification does not carry the synchronization information of the first cell serving base station such as eNB 1, the second cell serving base station acquires the synchronization information of the first cell serving base station from information reported by other UE in the cell in which the second UE is located.

Herein, the synchronization information at least includes: information about a spectrum resource occupied by a primary synchronization signal/secondary synchronization signal.

Alternatively, this step further includes the following operation.

The second cell serving base station determines a spectrum resource occupied by the first cell serving base station for transmitting data according to the synchronization information of the first cell serving base station. Then the second cell serving base station performs avoidance scheduling on transmitted data, which cause a conflict with the spectrum resource occupied by the first cell serving base station, in combination with a spectrum resource occupied by the second cell serving base station for transmitting data.

By scheduling the user equipment of the second cell serving base station to avoid transmitting data on the spectrum resource for the synchronization information of the first cell serving base station, the time spent by the second UE in search of the synchronization information is reduced, and the communication synchronization with the first UE is more quickly established.

In step 102, the second UE performs the synchronization search according to the received synchronization information, and establishes communication synchronization with the first UE.

According to the embodiment of the present invention, since the second cell serving base station acquires the synchronization information of the first cell serving base station, and the second UE searches for the synchronization of the first cell serving base station according to the acquired synchronization information of the first cell serving base station, no spectrum resource is occupied. The second UE quickly realizes synchronization with the first UE on the premise that the second cell serving base station schedules the cell thereof to avoid transmitting data on the spectrum resource for the synchronization information, and the synchronization time is saved, and the communication efficiency is improved.

FIG. 2 illustrates a structural diagram of a system for realizing D2D communication synchronization provided by an embodiment of the present invention. As illustrated in FIG. 2, the system includes:
a first UE, a second UE, a first cell serving base station at which the first UE is located and a second cell serving base station at which the second UE is located. Herein,
the first cell serving base station is arranged to determine that the first UE and the second UE, which perform D2D communication, are not in the same cell, and send a notification to the second cell serving base station to instruct the second cell serving base station to make a preparation for D2D communication.

The first cell serving base station is arranged to determine a cell in which the second UE is located according to the identification of the second UE carried in the D2D communication request to determine that the first UE and the second UE are not in the same cell, and send to the second cell serving base station.

The first cell serving base station may be arranged to send the notification to the second cell serving base station through an X2 interface, and the notification may also carry synchronization information of the first cell serving base station; and
the synchronization information at least includes: information about a spectrum resource occupied by a primary synchronization signal/secondary synchronization signal.

The second cell serving base station is arranged to acquire synchronization information of the first cell serving base station, and send the acquired synchronization information of the first cell serving base station to the second UE to perform a synchronization search.

The second cell serving base station is further arranged to, when the notification does not carry the synchronization information of the first cell serving base station, acquire the synchronization information of the first cell serving base station from information reported by other UE in the cell in which the second UE is located.

The second cell serving base station is further arranged to, when the acquired synchronization information of the first cell serving base station is sent to the second UE to perform the synchronization search, determine a spectrum resource occupied by the first cell serving base station for transmitting data according to the synchronization information of the first cell serving base station, and perform avoidance scheduling on transmitted data, which cause a conflict with the spectrum resource occupied by the first cell serving base station, in combination with a spectrum resource occupied by the second cell serving base station for transmitting data.

The second UE is arranged to perform the synchronization search according to the received synchronization information, and establish communication synchronization with the first UE.

The first UE is arranged to establish the communication synchronization with the second UE.

The first UE is further arranged to send a D2D communication request carrying an identification of the second UE to the first cell serving base station.

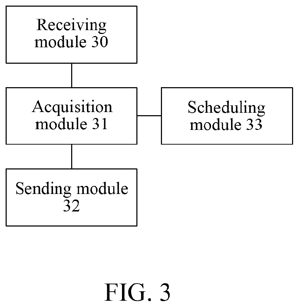

As illustrated in FIG. 3, an embodiment of the present invention further provides a base station, including:
a receiving module 30 arranged to receive a notification, sent by a first cell serving base station at which a first UE is located, about making a preparation for D2D communication;
an acquisition module 31 arranged to acquire synchronization information of the first cell serving base station at which the first UE is located; and
a sending module 32 arranged to send the acquired synchronization information of the first cell serving base station to the second UE served by the base station, such that the second UE performs a synchronization search and establishes communication synchronization with the first UE.

Alternatively, the receiving module 30 is arranged to receive the notification sent by the first cell serving base station through an X2 interface, and the notification may also carry synchronization information of the first cell serving base station.

Alternatively, the acquisition module 31 is arranged to acquire the synchronization information of the first cell serving base station from information reported by other UE in a cell in which the second UE is located.

Alternatively, the base station further includes:
a scheduling module 33 arranged to determine a spectrum resource occupied by the first cell serving base station for transmitting data according to the synchronization information of the first cell serving base station, and perform avoidance scheduling on transmitted data, which cause a conflict with the spectrum resource occupied by the first cell serving base station, in combination with a spectrum resource occupied by the base station for transmitting data.

One skilled in the art can understand that all or partial steps in the above-mentioned embodiments may be completed by using a computer program process, and the computer program may be stored in a computer readable storage medium. The computer program is executed on a corresponding hardware platform (e.g., a system, equipment, an apparatus or a device). When being executed, the computer program includes one or combinations of the steps of the method embodiments.

Alternatively, all or partial steps in the above-mentioned embodiments may also be implemented by using integrated circuits. These steps may be respectively manufactured into integrated circuit modules, or more modules or steps thereof may be manufactured into a single integrated circuit module to implement. Therefore, the present invention is not limited to any specific combination of hardware and software.

Each device/function module/function unit in the above-mentioned embodiments may be implemented by adopting a general-purpose computing device, and they may be integrated on a single computing device and may also be distributed on a network consisting of a plurality of computing devices.

When each device/function module/function unit in the above-mentioned embodiments is implemented by means of software function module and is sold or used as an independent product, it may be stored in a computer readable storage medium. The above-mentioned computer readable storage medium may be a read-only memory, a magnetic disk, a compact disk or the like.

### Industrial Applicability

According to the embodiments of the present invention, since the second cell serving base station sends the synchronization notification about the synchronization search to the second UE, no spectrum resource is occupied. The second UE quickly realizes synchronization with the first UE on the premise that the second cell serving base station schedules the cell thereof to avoid transmitting data on the spectrum resource for the synchronization information, and the synchronization time is saved, and the communication efficiency is improved.

## Claims

1. A method for realizing Device-to-Device, D2D, communication synchronization, comprising:
a second cell serving base station at which a second User Equipment, UE, is located receiving a notification, sent by a first cell serving base station at which a first UE is located, about making a preparation for D2D communication; and the second cell serving base station acquiring synchronization information of the first cell serving base station; and
the second cell serving base station sending the acquired synchronization information of the first cell serving base station to the second UE, such that the second UE performs a synchronization search and establishes communication synchronization with the first UE.

2. The method according to claim 1, wherein the notification is sent by the first cell serving base station after the first cell serving base station determines that the first UE and the second UE, which perform D2D communication, are not in a same cell; and
determining that the first UE and the second UE are not in the same cell comprises:
the first UE sending a D2D communication request to the first cell serving base station, wherein the D2D communication request carries an identification of the second UE; and the first cell serving base station determining a cell in which the second UE is located according to the identification of the second UE carried in the D2D communication request to determine that the first UE and the second UE are not in the same cell.

3. The method according to claim 1, wherein the second cell serving base station receives the notification sent by the first cell serving base station through an X2 interface.

4. The method according to claim 3, wherein,
the notification further carries the synchronization information of the first cell serving base station; and
the synchronization information at least comprises: information about a spectrum resource occupied by a primary synchronization signal/secondary synchronization signal.

5. The method according to claim 1, wherein the second cell serving base station acquiring synchronization information of the first cell serving base station comprises:
the second cell serving base station acquiring the synchronization information of the first cell serving base station from information reported by other UE in a cell in which the second UE is located.

6. The method according to claim 1, wherein, when the second cell serving base station sends the acquired synchronization information of the first cell serving base station to the second UE to perform the synchronization search, the method further comprises:
the second cell serving base station determining a spectrum resource occupied by the first cell serving base station for transmitting data according to the synchronization information of the first cell serving base station, and performing avoidance scheduling on transmitted data, which cause a conflict with the spectrum resource occupied by the first cell serving base station, in combination with a spectrum resource occupied by the second cell serving base station for transmitting data.

7. A system for realizing Device-to-Device, D2D, communication synchronization, comprising: a first User Equipment, UE, a second UE, a first cell serving base station at which the first UE is located and a second cell serving base station at which the second UE is located, wherein,
the first cell serving base station is arranged to determine that the first UE and the second UE, which perform D2D communication, are not in a same cell, and send a notification about making a preparation for D2D communication to the second cell serving base station;
the second cell serving base station is arranged to acquire synchronization information of the first cell serving base station, and send the acquired synchronization information of the first cell serving base station to the second UE to perform a synchronization search;
the second UE is arranged to perform the synchronization search according to the received synchronization information, and establish communication synchronization with the first UE; and
the first UE is arranged to establish the communication synchronization with the second UE.

8. The system according to claim 7, wherein the first UE is further arranged to send a D2D communication request carrying an identification of the second UE to the first cell serving base station; and
the first cell serving base station is arranged to determine a cell in which the second UE is located according to the identification of the second UE carried in the D2D communication request, to determine that the first UE and the second UE are not in the same cell, and send to the second cell serving base station.

9. The system according to claim 7, wherein the first cell serving base station is arranged to send the notification to the second cell serving base station through an X2 interface.

10. The system according to claim 9, wherein,
the notification further carries the synchronization information of the first cell serving base station; and
the synchronization information at least comprises: information about a spectrum resource occupied by a primary synchronization signal/secondary synchronization signal.

11. The system according to claim 7, wherein the second cell serving base station is arranged to acquire the synchronization information of the first cell serving base station from information reported by other UE in a cell in which the second UE is located.

12. The system according to claim 7, wherein the second cell serving base station is further arranged to, when the acquired synchronization information of the first cell serving base station is sent to the second UE to perform the synchronization search, determine a spectrum resource occupied by the first cell serving base station for transmitting data according to the synchronization information of the first cell serving base station, and perform avoidance scheduling on transmitted data, which cause a conflict with the spectrum resource occupied by the first cell serving base station, in combination with a spectrum resource occupied by the second cell serving base station for transmitting data.

13. A base station, comprising:
a receiving module arranged to receive a notification, sent by a first cell serving base station at which a first UE is located, about making a preparation for D2D communication between the first UE and a second UE served by the base station;
an acquisition module arranged to acquire synchronization information of the first cell serving base station at which the first UE is located; and
a sending module arranged to send the acquired synchronization information of the first cell serving base station to the second UE served by the base station, such that the second UE performs a synchronization search and establishes communication synchronization with the first UE.

14. The base station according to claim 13, wherein,
the receiving module is arranged to receive the notification sent by the first cell serving base station through an X2 interface.

15. The base station according to claim 14, wherein,
the notification further carries the synchronization information of the first cell serving base station; and
the synchronization information at least comprises: information about a spectrum resource occupied by a primary synchronization signal/secondary synchronization signal.

16. The base station according to claim 13, wherein the acquisition module is arranged to acquire the synchronization information of the first cell serving base station from information reported by other UE in a cell in which the second UE is located.

17. The base station according to claim 13, further comprising:
a scheduling module arranged to determine a spectrum resource occupied by the first cell serving base station for transmitting data according to the synchronization information of the first cell serving base station, and perform avoidance scheduling on transmitted data, which cause a conflict with the spectrum resource occupied by the first cell serving base station, in combination with a spectrum resource occupied by the base station for transmitting data.

18. A computer program comprising program instructions, wherein, when the program instructions are executed by a base station, a computer can implement the method according to any one of claims 1-6.

19. A computer-readable storage medium carrying the computer program according to claim 18.
